# EUROPEAN PATENT SPECIFICATION

(11) **EP 2 132 416 B1**
(45) Date of publication and mention of the grant of the patent: **15.07.2015**
(21) Application number: 07736664.9
(22) Date of filing: 02.03.2007
(51) Int. Cl.: F01K 23/10, F22B 1/18, F23C 6/04, G05D 23/00, F23N 1/08, F23N 5/02

(54) **COMBINED CYCLE ELECTRIC POWER PLANT AND RELATING OPERATING METHOD**
ANLAGE ZUR ERZEUGUNG VON ELEKTRIZITÄT MIT KOMBINIERTEM ZYKLUS UND ENTSPRECHENDES BETRIEBSVERFAHREN
CENTRALE ÉLECTRIQUE À CYCLE COMBINÉ ET SON PROCÉDÉ DE FONCTIONNEMENT

(43) Date of publication of application: 16.12.2009
(73) Proprietor: ANSALDO ENERGIA S.P.A., 16152 Genova (IT)
(72) Inventor: PRATICO' , Ferdinando, I-16145 Genova (IT)
(74) Representative: Eccetto, Mauro
(86) International application number: PCT/IT2007/000158
(87) International publication number: WO 2008/107916

(56) References cited:
- EP-A- 0 899 505
- EP-A- 1 701 006
- WO-A-98/39599
- GB-A- 2 287 312
- US-A- 3 948 043
- US-A- 4 136 643
- US-A- 4 208 882

## Description

### TECHNICAL FIELD

The present invention relates to a combination-cycle electric power plant.

More specifically, the present invention relates to a combination-cycle electric power plant featuring a post-firing, heat-recovery steam generator.

### BACKGROUND ART

A combination-cycle electric power plant normally comprises combination-cycle electric power plant comprising a gas turbine unit; a steam turbine unit; a steam circuit extending through first and second a number of heat exchange modules arranged in line; a post-firing, heat-recovery steam generator, which transfers the residual energy of the exhaust gases from the gas turbine unit to the steam, and is equipped with a power-adjustable first burner for heating first and second heat exchange modules; and a power-adjustable second burner arranged between the first and the second heat exchange modules to only heat the second heat exchange modules.

Documents EP 899,505, EP 1,701,006, WO 98/38599, and US 4,136,643 reflects the above- identified combination-cycle electric power plant, whereas document GB 2,287,312 discloses a gas turbine can combustor and the relative combustion control method.

The combination-cycle electric power plants often show a reduction in efficiency due to the heat-recovery steam generator being designed to operate in both post-firing and non-post-firing mode, and to the heat exchange modules of the heat-recovery steam generator being designed to maximize efficiency in non-post-firing operating mode. When the heat-recovery steam generator switches from non-post-firing to post-firing mode, an excessive increase in steam temperature occurs, to the extent that the steam must be systematically cooled before it is supplied to the steam turbine unit. The amount of cooling required is in direct proportion to the amount of gas burned in post-firing mode, thus seriously impairing efficiency of the combination-cycle plant.

Another critical aspect of post-firing, heat- recovery steam generators is the increase in fume temperature, which calls for replacing the conventional component parts of the heat-recovery steam generator with more expensive parts, even to the extent of having to replace the entire heat-recovery steam generator with a much more expensive conventional steam generator.

In view of the above drawbacks, combination-cycle plants are frequently equipped with non-post-firing, heat-recovery steam generators.

### DISCLOSURE OF INVENTION

It is an object of the present invention to provide a combination-cycle plant designed to eliminate the drawbacks of the known art, and which, in particular, produces more power simply and cheaply, with no serious impairment in efficiency.

According to the present invention, there is provided a combination-cycle electric power plant comprising a gas turbine unit; a steam turbine unit; a steam circuit extending through first and second heat exchange modules arranged in line; a post-firing, heat-recovery steam generator, which transfers the residual energy of the exhaust gases from the gas turbine unit to the steam, and is equipped with a power-adjustable first burner for heating first and second heat exchange modules; and a power-adjustable second burner arranged between the first and the second heat exchange modules to only heat the second heat exchange modules; a first and second temperature sensors for emitting a temperature signal related respectively to the steam temperature along the section of the steam circuit connecting the first heat exchange modules and the steam turbine unit and to the steam temperature signal along the section of the steam circuit connecting the second heat exchange modules and the steam turbine unit; and a control unit for adjusting the power of the first and second burners as a function of the temperature signals; wherein the plant comprises fuel feed lines to the first and second burner; the plant being characterised in that the control unit emits a power signal defining the total fuel supply to the first and second burner; and a dividing signal for dividing the fuel supply between the first and second burner as a function of the temperature signals.

As such, the present invention provides for improving efficiency of the plant in all operating conditions, while greatly reducing steam cooling requirements.

Simulation tests conducted by the applicant show the present invention provides for a slight increase in electric power output by the plant as a whole, as compared with the known art and for a given amount of fuel burned in post-firing mode; for a considerable improvement in the efficiency of the plant; and for a considerable reduction in post-firing exhaust fume temperature, thus allowing significant freedom in the choice of materials from which the heat exchange modules of the heat-recovery steam generator are made.

The present invention also relates to a combination-cycle plant operating method.

According to the present invention, there is provided a method of operating a combination-cycle electric power plant, the combination-cycle plant comprising a gas turbine unit; a steam turbine unit; a steam circuit extending through first and second heat exchange modules arranged in line; and a post-firing, heat-recovery-steam generator, which transfers the residual energy of the exhaust gases from the gas turbine unit to the steam; the method comprising the steps of heating the first and second heat exchange modules of the heat-recovery steam generator by means of a power-adjustable first burner; heating only the second heat exchange modules by means of a power-adjustable second burner located between the first and second heat exchange modules; emitting temperature signals related respectively to the steam temperature along the section of the steam circuit connecting the first heat exchange modules and the steam turbine unit and to the steam temperature signal along the section of the steam circuit connecting the second heat exchange modules and the steam turbine unit; and adjusting the power of the first and second burners as a function of the temperature signals by means of a control unit; the method being characterized by adjusting the power of the heat-recovery steam generator by adjusting the total fuel supply to the first and second burner by means of a power signal and as a function of power demand and of the total power supplied by the gas turbine unit and the steam turbine unit; and dividing the fuel supply between the first and second burner by means of a dividing signal and as a function of the temperature signals.

### BRIEF DESCRIPTION OF THE DRAWINGS

A non-limiting embodiment of the invention will be described by way of example with reference to the accompanying drawings, in which:
Figure 1 shows a diagram, with parts removed for clarity, of a combination-cycle plant in accordance with the present invention;
Figure 2 shows a block diagram, with parts removed for clarity, of the control unit of the Figure 1 plant.

### BEST MODE FOR CARRYING OUT THE INVENTION

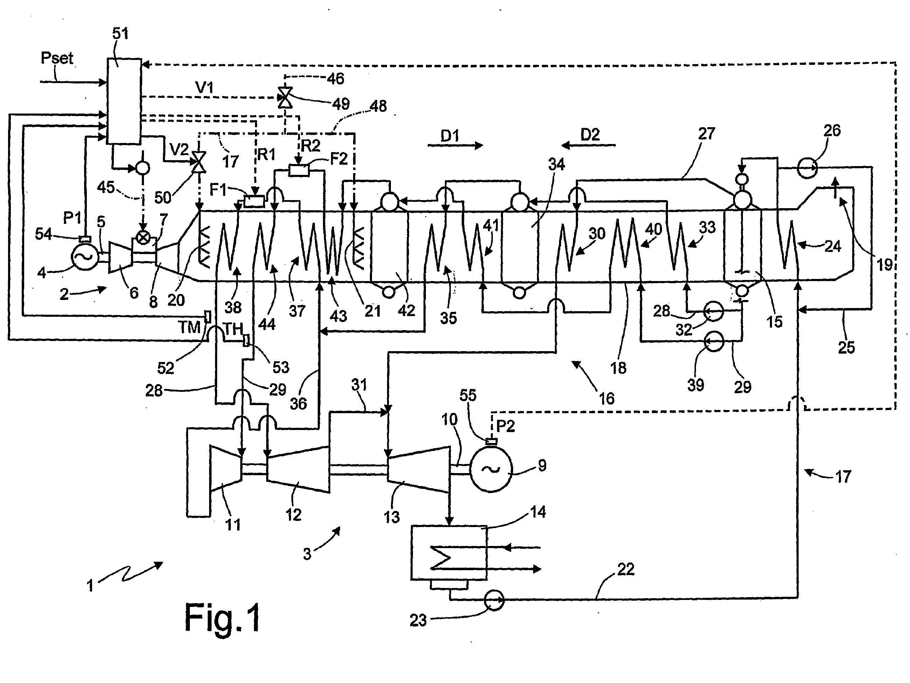

Number 1 in Figure 1 indicates as a whole a combination-cycle plant comprising a gas turbine unit 2; and a steam turbine unit 3. Gas turbine unit 2 is the first motor of combination-cycle plant 1, may be fuelled with natural gas or gas oil, is connected to an alternator 4, and comprises a shaft 5, a compressor 6, a combustion chamber 7, and a gas turbine 8.

Steam turbine unit 3 is connected to an alternator 9, and comprises a shaft 10; a high-pressure steam turbine 11; a intermediate-pressure steam turbine 12; a low-pressure steam turbine 13; a condenser 14; and a heat exchange module 15 - in the example shown, an evaporator/deaerator.

Combination-cycle plant 1 comprises a heat-recovery steam generator 16 for recovering the residual heat generated by gas turbine unit 2; and a steam circuit 17, which supplies steam turbine unit 3 and extends through heat-recovery steam generator 16.

Heat-recovery steam generator 16 comprises a combustion chamber 18 extending from the outlet of gas turbine 8 to the mouth 19 of a stack (not shown) and housing part of steam circuit 17. In other words, combustion and post-firing fumes are substantially fed in a direction D1 inside combustion chamber 18, whereas steam is substantially fed in a direction D2 opposite direction D1. Heat-recovery steam generator 16 comprises a duct burner type power-adjustable burner 20 housed inside combustion chamber 18, at the outlet of gas turbine 8; and a duct burner type power-adjustable burner 21 housed inside combustion chamber 18, downstream from burner 20 in direction D1.

Steam circuit 17 comprises a branch 22 connecting condenser 14 to heat-recovery steam generator 16, and along which is fitted a condensate extraction pump 23 from condenser 14. Inside combustion chamber 18, branch 22 supplies a heat exchange module 24 located at the mouth 19 of the stack to heat the condensate. Downstream from heat exchange module 24 in direction D2, branch 22 supplies evaporator/deaerator 15 housed inside combustion chamber 18, and a recirculation branch 25 extending outside combustion chamber 18 and along which is fitted a recirculation pump 26. Branch 25 provides for heating the condensate, before it is fed to heat-recovery steam generator 16, to prevent condensation phenomena.

From heat exchange module (evaporator/deaerator) 15, steam circuit 17 comprises a low-pressure steam branch 27 supplying low-pressure steam turbine 13; a intermediate-pressure steam branch 28 supplying intermediate-pressure steam turbine 12; and a high-pressure steam branch 29 supplying high-pressure steam turbine 11.

Branch 27 supplies a heat exchange module 30 - in the example shown, a low-pressure superheater housed inside combustion chamber 18 - and is connected to a connecting branch 31 from the outlet of intermediate-pressure steam turbine 12, before supplying low-pressure steam turbine 13.

Branch 28 has a feed pump 32, and supplies in succession a heat exchange module 33 - in the example shown, a intermediate-pressure economizer; and a heat exchange module 34 - in the example shown, a intermediate-pressure evaporator housed inside combustion chamber 18. Upstream from intermediate-pressure evaporator 34 in direction D1, branch 28 supplies a heat exchange module 35 - in the example shown, a intermediate-pressure superheater - upstream from which it is connected to a branch 36 from high-pressure steam turbine 11 before reentering combustion chamber 18. Next, branch 28 supplies in succession two heat exchange modules 37 and 38 - in the example shown, two series intermediate-pressure re-superheaters - and intermediate-pressure steam turbine 12.

A de-superheater F1 is located along branch 28, between heat exchange modules 37 and 38, to cool the steam when it exceeds a given threshold temperature.

Branch 29 has a feed pump 39, and supplies a heat exchange module 40 - in the example shown, a high-pressure economizer housed inside combustion chamber 18, between the evaporator/deareator (heat exchange module 15) and the intermediate-pressure evaporator (heat exchange module 34); and a heat exchange module 41 - in the example shown, a further high-pressure economizer downstream from intermediate-pressure evaporator 34 in direction D2. Next, branch 29 supplies a heat exchange module 42 - in the example shown, a high-pressure evaporator - downstream from which it supplies in succession two heat exchange modules 43 and 44 - in the example shown, two high-pressure superheaters - and high-pressure steam turbine 11.

A de-superheater F2 is located along branch 29, between heat exchange modules 43 and 44, to cool the steam when it exceeds a given threshold temperature.

Combination-cycle plant 1 comprises a line 45 supplying fuel, normally gas or gas oil, to combustion chamber 7; and a line 46 supplying fuel, normally gas, to burners 20 and 21, and which forks into a line 47 supplying burner 20, and a line 48 supplying burner 21. The plant comprises a powered valve 49 located along line 46; and a powered valve 50 located along line 47.

Combination-cycle plant 1 comprises a control unit 51 for selectively activating post-firing operating mode and non-post-firing operating mode of heat-recovery steam generator 16.

Plant 1 comprises a temperature sensor 52 located along branch 28, and which emits a signal TM related to the intermediate-pressure steam temperature along the section between heat-recovery steam generator 16 and the inlet of intermediate-pressure steam turbine 12; a temperature sensor 53 located along branch 29, and which emits a signal TH related to the high-pressure steam temperature along the section between heat-recovery steam generator 16 and the inlet of high-pressure steam turbine 11; a power sensor 54 located at alternator 4, and which emits a signal P1 related to the power emitted by alternator 4; and a power sensor 55 located at alternator 9, and which emits a signal P2 related to the power emitted by alternator 9.

Control unit 51 receives and processes signals TM, TH, P1 and P2; a signal Pset related to the total power demanded of combination-cycle plant 1; a signal TMmax related to the maximum temperature permitted along intermediate-pressure steam branch 28; a signal TMmin related to the minimum temperature permitted along intermediate-pressure steam branch 28; a signal THmax related to the maximum temperature permitted along high-pressure steam branch 29; and a signal THmin related to the minimum temperature permitted along high-pressure steam branch 29.

Control unit 51 emits a power signal V1 for adjusting the opening of valve 49; a dividing signal V2 for adjusting the opening of valve 50; a signal R1 for activating and regulating de-superheater F1; a signal R2 for activating and regulating de-superheater F2; and a warning signal C indicating a malfunction of control unit 51 or sensors 52 and 53.

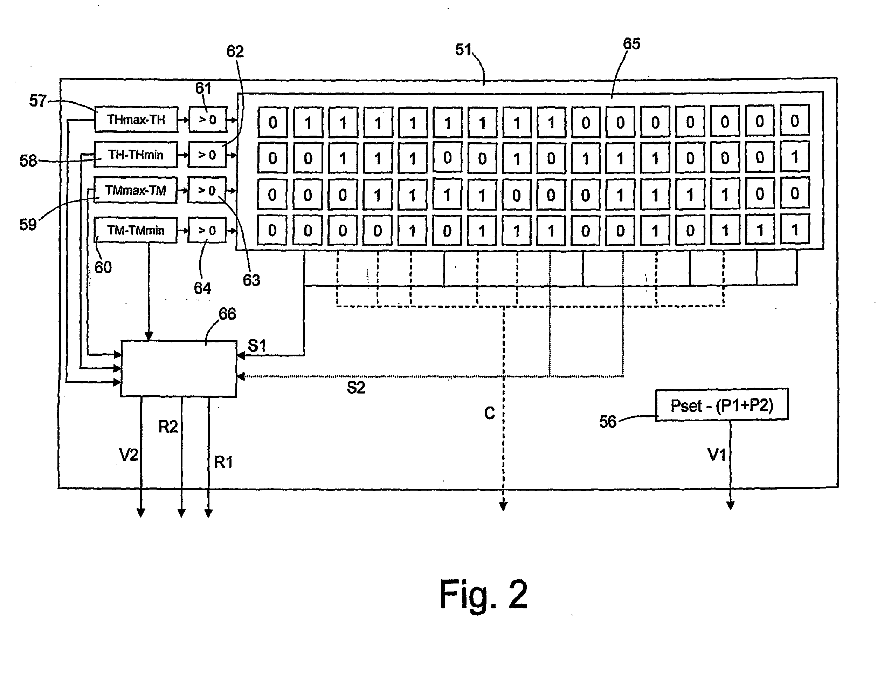

With reference to Figure 2, the control unit comprises a computing block 56, which calculates the difference between signal Pset related to the power demanded of plant 1, and the sum of signals P1 and P2 related to the total power output of plant 1, and accordingly supplies power signal V1 to adjust valve 49 to increase or reduce total gas supply to burners 20 and 21.

Control unit 51 comprises computing blocks 57-60, which calculate the difference between signal THmax and signal TH; between signal TH and signal THmin; between signal TMmax and signal TM; and between signal TM and signal TMmin. Control unit 51 comprises comparing blocks 61-64, which determine whether the calculated differences are greater than zero, emit respective 0 signals when the conditions set in respective comparing blocks 61-64 are satisfied, and otherwise emit respective 1 signals.

Control unit 51 comprises a logic block 65, which compares and determines any incongruity in the signals emitted by comparing blocks 61-64, e.g. whether signal TH is simultaneously greater than THmax and less than THmin. In the event of this occurring, logic block 65 emits warning signal C indicating a malfunction of control unit 51 or temperature sensor 52. Similarly, incongruity is indicated if signal TM is simultaneously greater than TMmax and less than TMmin. In control unit 51 in the example shown, there are a total of seven possible incongruous combinations resulting in the emission of signal C.

When all the comparing blocks emit 0 signals, this means signals TH and TM are within the respective predetermined operating ranges, and no signals are emitted by logic block 65.

When signal TH is outside the predetermined range, and signal TM is within the respective predetermined range or outside the respective range and on the same side as signal TH, logic block 65 transmits a consent signal S1 to a control block 66, authorizing control block 66 to emit signal V2 to adjust valve 50. The amount of adjustment is defined by one of computing blocks 57-60 connected to control block 66.

When signal TH is above the set maximum value THmax and signal TM is below the set minimum value TMmin, or when signal TM is above the set maximum value TMmax and signal TH is below the set minimum value THmin, working on burner 20 alone is not enough to reestablish correct operating temperatures, so the control block emits signal R1 or R2 to activate de-superheater F1 or F2.

Operation of de-superheaters F1 and F2 may also be authorized by a timer (not shown), which determines continuation of an abnormal operating condition even after the power division between first and second burner 20 and 21.

Operation of de-superheaters F1 and F2, which withdraw thermal power from combination-cycle plant 1, is therefore only required in two operating conditions with respect to the sixteen columns in the logic block 65 matrix. This is made possible by heat-recovery steam generator 16 comprising two burners 20, 21 located at different parts of heat-recovery steam generator 16, and by the possibility of adjusting fuel supply to burners 21, 22, while maintaining total fuel supply to burners 21, 22 constant.

Heat-recovery steam generator 16 extends from the outlet of gas turbine 8, and heat exchange modules 15, 24, 30, 33, 34, 35, 37, 38, 40, 41, 42, 43, 44 are preferably distributed as shown in the accompanying drawing. That is, from the outlet of gas turbine 8 to mouth 19, intermediate-pressure heat exchange module 38, high-pressure heat exchange module 44, intermediate-pressure heat exchange module 37, high-pressure heat exchange module 43, and heat exchange module (high-pressure evaporator) 42 are arranged successively in direction D1 inside combustion chamber 18. Burner 20 is located between the outlet of gas turbine 8 and intermediate-pressure heat exchange module 38, while burner 21 is located between high-pressure heat exchange module 43 and heat exchange module (high-pressure evaporator) 42. Burners 20 and 21 are preferably oriented in direction D1. That is, the thermal power emitted by burner 20 is directed towards high-pressure heat exchange module 38, and the power emitted by burner 21 is directed towards high-pressure evaporator 42.

Downstream from heat exchange module (high-pressure evaporator) 42, are arranged successively in direction D1: intermediate-pressure heat exchange module 35, high-pressure heat exchange module 41, heat exchange module (intermediate-pressure evaporator) 34, intermediate-pressure heat exchange module 30, high-pressure heat exchange module 40, intermediate-pressure heat exchange module 33, heat exchange module (evaporator/deaerator) 15, and heat exchange module 24 of branch 22 from condenser 14.

In a variation not shown, heat exchange module (evaporator/deaerator) 15 is replaced by an evaporator housed inside combustion chamber 18, and by a deaerator outside combustion chamber 18.

Particularly noteworthy is the location of burners 20 and 21 between gas turbine 8 and heat exchange module (high-pressure evaporator) 42, which is the area of heat-recovery steam generator 16 in which the highest temperatures most critical for both the steam and the structure of heat-recovery steam generator 16 are generated in post-firing mode.

As will be clear from the foregoing description, the advantages of the present invention are numerous, both in terms of improved efficiency and output of the combination-cycle plant, and the reduction in cost of the materials from which the heat exchange modules of heat-recovery steam generator 16 are made.

## Claims

1. A combination-cycle electric power plant comprising a gas turbine unit (2); a steam turbine unit (3); a steam circuit (17) extending through first and second heat exchange modules (15, 24, 30, 33, 34, 35, 37, 38, 40, 41, 42, 43, 44) arranged in line; and a post-firing, heat-recovery steam generator (16), which transfers the residual energy of the exhaust gases from the gas turbine unit (2) to the steam, and is equipped with a power-adjustable first burner (20) for heating first and second heat exchange modules (15, 24, 30, 33, 34, 35, 37, 38, 40, 41, 42, 43, 44); and a power-adjustable second burner (21) arranged between the first and the second heat exchange modules (15, 24, 30, 33, 34, 35, 37, 38, 40, 41, 42, 43, 44) to only heat the second (15, 24, 30, 33, 34, 35, 40, 41, 42); a first and second temperature sensors (52, 53) for emitting a temperature signal (TM) related respectively to the steam temperature along the section of the steam circuit (17) connecting the first heat exchange modules (37, 38, 43, 44) and the steam turbine unit (3) and to the steam temperature signal (TH) along the section of the steam circuit (17) connecting the second heat exchange modules (15, 24, 30, 33, 34, 35, 37, 38, 40, 41, 42, 43, 44) and the steam turbine unit (3); and a control unit (51) for adjusting the power of the first and second burners (20, 21) as a function of the temperature signals (TH, TM); wherein the plant comprises fuel feed lines (46, 47, 48) to the first and second burner (20, 21) ; the plant being **characterised in that** the control unit (51) emits a power signal (V1) defining the total fuel supply to the first and second burner (20, 21); and a dividing signal (V2) for dividing the fuel supply between the first and second burner (20, 21) as a function of the temperature signals (TH, TM).

2. A plant as claimed in Claim 1, **characterized in that** the heat-recovery steam generator (16) comprises a combustion chamber (18) extending from the outlet of the gas turbine unit (2) to the mouth (19) of a stack; the gases from the gas turbine unit (2) being fed substantially in a given direction (D1) to the mouth (19) of the stack; and the first and second burner (20, 21) and the first and second heat exchange modules (15, 24, 30, 33, 34, 35, 37, 38, 40, 41, 42, 43, 44) being arranged in the given direction (D1) inside the combustion chamber (18).

3. A plant as claimed in Claim 1, **characterized by** comprising at least one de-superheater (F1, F2); the control unit (51) comprising a logic block (65) and a control block (66), which emit a signal (R1, R2) enabling the de-superheater (F1, F2).

4. A plant as claimed in Claim 1, **characterized in that** the control unit (51) comprises computing blocks (57, 58, 59, 60) and comparing blocks (61, 62, 63, 64) for determining whether the temperature signals (TH, TM) are within a permitted ranges.

5. A plant as claimed in claim 4, **characterized in that** the control unit (51) comprises a logic block (65) for determining incongruity of the signals emitted by the comparing blocks (61, 62, 63, 64), and for emitting a warning signal (C) if any incongruity is determined.

6. A plant as claimed in Claim 4, **characterized in that** the control unit (51) comprises a logic block (65) which emits a first signal (S1) authorizing emission of the dividing signal (V2) dividing fuel between the first and second burner (20, 21); and a control block (66) for determining the value of the dividing signal (V2).

7. A plant as claimed in Claim 6, **characterized in that** the logic block (65) emits a second signal (S2) authorizing emission of the signal (R1, R₂) enabling the de-superheaters (F1, F2).

8. A method of operating a combination-cycle electric power plant, the combination-cycle plant (1) comprising a gas turbine unit (2) ; a steam turbine unit (3); a steam circuit (17) extending through first and second heat exchange modules arranged in line; and a post-firing, heat-recovery-steam generator (16), which transfers the residual energy of the exhaust gases from the gas turbine unit (2) to the steam; the method comprising the steps of heating the first and second heat exchange modules (15, 24, 30, 33, 34, 35, 37, 38, 40, 41, 42, 43, 44) of the heat-recovery steam generator (16) by means of a power-adjustable first burner (20); heating only the second heat exchange modules (15, 24, 30, 33, 34, 35, 40, 41, 42) by means of a power-adjustable second burner (21) located between the first (37, 38, 43, 44) and second (15, 24, 30, 33, 34, 35, 40, 41, 42) heat exchange modules; emitting temperature signals (TH, TM) related respectively to the steam temperature along the section of the steam circuit (17) connecting the first heat exchange modules (37, 38, 43, 44) and the steam turbine unit (3) and to the steam temperature signal (TH) along the section of the steam circuit (17) connecting the second heat exchange modules (15, 24, 30, 33, 34, 35, 37, 38, 40, 41, 42, 43, 44) and the steam turbine unit (3); and adjusting the power of the first and second burners (20, 21) as a function of the temperature signals (TH, TM) by means of a control unit (51); the method being **characterized by** adjusting the power of the heat-recovery steam generator (16) by adjusting the total fuel supply to the first and second burner (20, 21) by means of a power signal (V1) and as a function of power demand (Pset) and of the total power supplied by the gas turbine unit (2) and the steam turbine unit (3); and dividing the fuel supply between the first and second burner (20, 21) by means of a dividing signal (V2) and as a function of the temperature signals (TH, TM).

9. A method as claimed in Claim 8, **characterized in that** the gases emitted by the gas turbine unit (2) are fed along a combustion chamber (18) of the heat-recovery steam generator (16) in a direction (D1) in which the first and second burner (20, 21), and the number of heat exchange modules (15, 24, 30, 33, 34, 35, 37, 38, 40, 41, 42, 43, 44) are arranged.

10. A method as claimed in Claim 8, **characterized by** determining whether the temperature signals (TH, TM) are within a permitted ranges.

11. A method as claimed in Claim 10, **characterized by** determining incongruity of the signals emitted by the comparing blocks (61, 62, 63, 64) ; and emitting a warning signal (C) if any incongruity is determined.

12. A method as claimed in Claim 11, **characterized by** emitting a first signal (S1) authorizing emission of the dividing signal (V2) dividing fuel between the first and second burner (20, 21) ; and determining the value of the dividing signal (V2) by means of a control block (66).

13. A method as claimed in Claim 11, **characterized by** emitting a second signal (S2) authorizing emission of a signal (R1, R2) enabling a de-superheater (F1, F2) for withdrawing heat from the steam supplied by the steam circuit (17).

## Patentansprüche

1. Kombinationskraftwerk, umfassend:
eine Gasturbineneinheit (2);
eine Dampfturbineneinheit (3);
einen Dampfkreislauf (17), welcher sich durch erste und zweite Wärmetauschermodule (15, 24, 30, 33, 34, 35, 37, 38, 40, 41, 42, 43, 44) hindurch erstreckt, welche in Reihe angeordnet sind; und
einen nachheizenden Dampfgenerator (16) zur Wärmerückgewinnung, welcher die Restenergie der Abgase von der Gasturbineneinheit (2) auf den Dampf überträgt und mit einem ersten, in der Leistung regelbaren Brenner (20) ausgerüstet ist, um erste und zweite Wärmetauschermodule (15, 24, 30, 33, 34, 35, 37, 38, 40, 41, 42, 43, 44) aufzuheizen,
und mit einem zweiten, in der Leistung regelbaren Brenner (21) zwischen den ersten und
zweiten Wärmetauschermodulen (15, 24, 30, 33, 34, 35, 37, 38, 40, 41, 42, 43, 44) angeordneten ausgerüstet ist, um nur das zweite (15, 24, 30, 33, 34, 35, 40, 41, 42) aufzuheizen;
erste und zweite Temperatursensoren (52, 53) zum Ausgeben eines Temperatursignals (TM), welches sich entsprechend auf die Dampftemperatur entlang des Abschnitts des Dampfkreislaufs (17), der die ersten Wärmetauschermodufe (37, 38, 43, 44) und die Dampfturbineneinheit (3) verbindet, und auf das Dampftemperatursignal (TH) entlang des Abschnitts des Dampfkreislaufs (17), bezieht, welcher die zweiten Wärmetauschermodule (15, 24, 30, 33, 34, 35, 37, 38, 40, 41, 42, 43, 44) und die Dampfturbineneinheit (3) verbindet; und
eine Steuereinheit (51) zum Einstellen der Leistung des ersten und des zweiten Brenners (20, 21 als eine Funktion des Temperatursignals (TH, TM);
wobei das Kraftwerk Brennstoffzuleitungen (46, 47, 48) zu dem ersten und dem zweiten Brenner (20, 21) umfasst;
wobei das Kraftwerk **dadurch gekennzeichnet ist, dass** die Steuereinheit (51) ein Leistungssignal (V1) ausgibt, welches die gesamte Brennstoffversorgung für den ersten und
den zweiten Brenner (20, 21) bestimmt, und ein Aufteilungssignal (V2) ausgibt, um die Brennstoffversorgung zwischen dem ersten und dem zweiten Brenner (20, 21) als eine Funktion der Temperatursignale (TH, TM) aufzuteilen.

2. Kraftwerk nach Anspruch 1, **dadurch gekennzeichnet, dass** der Dampfgenerator (16) zur Wärmerückgewinnung eine Verbrennungskammer (18) umfasst, welche vom Auslass der Gasturbineneinheit (2) zur Mündung (19) eines Schachtes reicht, wobei die Gase aus der Gasturbineneinheit (2) im Wesentlichen in einer vorgegebenen Richtung (D1) in die Mündung (19) des Schachtes eingespeist werden, und wobei der erste und der zweite Brenner (20, 21) und die ersten und zweiten Wärmetauschermodule (15, 24, 30, 33, 34, 35, 37, 38, 40, 41, 42, 43, 44) in der vorgegebenen Richtung (D1) im Inneren der Verbrennungskammer (18) angeordnet sind.

3. Kraftwerk nach Anspruch 1, **dadurch gekennzeichnet, dass** es mindestens einen Dampfkühler (F1, F2) umfasst, wobei die Steuereinheit (51) einen Logikblock (65) und einen Steuerblock (66) umfasst, die ein Signal (R1, R2) ausgeben, das den Dampfkühler (F1, F2) in Betrieb setzt.

4. Kraftwerk nach Anspruch 1, **dadurch gekennzeichnet, dass** die Steuereinheit (51) Berechnungsblöcke (57, 58, 59, 60) und Vergleichsblöcke (61, 62, 63, 64) umfasst, um festzustellen, ob die Temperatursignale (TH, TM) innerhalb zulässiger Bereiche liegen.

5. Kraftwerk nach Anspruch 4, **dadurch gekennzeichnet, dass** die Steuereinheit (51) einen Logikblock (65) umfasst, um Nichtübereinstimmung der durch die Vergleichsblöcke (61,62, 63, 64) ausgegebenen Signale festzustellen, und um ein Warnsignal (C) auszugeben, wenn eine Nichtübereinstimmung festgestellt wurde.

6. Kraftwerk nach Anspruch 4, **dadurch gekennzeichnet, dass** die Steuereinheit (51) einen Verknüpfungsblock (65) umfasst, der ein erstes Signal (S1) ausgibt, welches das Ausgeben des Aufteilungssignals (V2) zulässt, um die Brennstoffversorgung zwischen dem ersten und dem zweiten Brenner (20, 21) aufzuteilen; und dass es einen Steuerblock (66) zum Feststellen des Wertes des Aufteilungssignals (V2) umfasst.

7. Kraftwerk nach Anspruch 6, **dadurch gekennzeichnet, dass** der Logikblock (65) ein zweites Signal (S2) ausgibt, welches das Ausgeben des Signals (R1, R2) zulässt, das die Dampfkühler (F1, F2) in Betrieb setzt.

8. Verfahren zum Betreiben eines Kombinationskraftwerks, wobei das Kombinationskraftwerk Folgendes umfasst:
eine Gasturbineneinileit (2);
eine Dampfturbineneinheit (3);
einen Dampfkreislauf (17), welcher sich durch erste und zweite Wärmetauschermoduie hindurch erstreckt, welche in Reihe angeordnet sind; und
einen nachheizenden Dampfgenerator (16) zur Wärmerückgewinnung, welcher die Restenergie der Abgase von der Gasturbineneinheit (2) auf den Dampf überträgt,
wobei das Verfahren folgende Schritte umfasst:
Aufheizen der ersten und zweiten Warrnetauschermodule (15, 24, 30, 33, 34, 35, 37, 38, 40, 41, 42, 43, 44) des Dampfgenerators (16) zur Wärmerückgewinnung mittels eines ersten, in der Leistung regelbaren Brenners (20);
Aufheizen nur der zweiten Wärmetauschermodule (15, 24, 30, 33, 34, 35, 40, 41, 42) mittels eines zweiten, in der Leistung regelbaren Brenners (21), der sich zwischen den ersten (37, 38, 43, 44) und zweiten Wärmetauschermodulen (15, 24, 30, 33, 34, 35, 40, 41, 42) befindet;
Ausgeben von Temperatursignalen (TH, TM), welche sich entsprechend auf die Dampftemperatur entlang des Abschnitts des Dampfkreislaufs (17), der die ersten Wärmetauschermodule (37, 38, 43, 44) und die Dampfturbineneinheit (3) verbindet, und auf das Dampftemperatursignal (TH) entlang des Abschnitts des Dampfkreislaufs (17), bezieht,
welcher die zweiten Wärmetauschermodule (15, 24, 30, 33, 34, 35, 37, 38, 40, 41, 42, 43, 44) und die Dampfturbineneinheit (3) verbindet; und
Einstellen der Leistung des ersten und des zweiten Brenners (20, 21), als eine Funktion des Temperatursignals (TH, TM) mittels der Steuereinheit (51);
wobei das Verfahren **dadurch gekennzeichnet ist, dass** die Leistung des Dampfgenerators (16) zur Wärmerückgewinnung durch das Anpassen der gesamten Brennstoffversorgung zu dem ersten und dem zweiten Brenner (20, 21) eingestellt wird, was mittels eines Leistungssignals (V1) und als Funktion der Leistungsanforderung (Pset) sowie der gesamten durch die Gasturbineneinheit (2) und die Dampfturbineneinheit (3) zur Verfugung gestellten Leistung erfolgt; und
dass die Brennstoffversorgung zwischen dem ersten und dem zweiten Brenner (20, 21) mittels eines Aufteilungssignals (V2) und als eine Funktion der Temperatursignale (TH, TM) aufgeteilt wird.

9. Verfahren nach Anspruch 8, **dadurch gekennzeichnet, dass** die von der Gasturbineneinheit (2) ausgegebenen Gase entlang einer Verbrennungskammer (18) des Dampfgenerators (16) zur Wärmerückgewinnung in einer Richtung (D1) eingespeist werden, in weicher der erste und der zweite Brenner (20, 21) und die Anzahl von Wärmetauschermodulen (15, 24, 30, 33, 34, 35, 37, 38, 40, 41, 42, 43, 44) angeordnet sind.

10. Verfahren nach Anspruch 8, **dadurch gekennzeichnet, dass** bestimmt wird, ob die Temperatursignale (TH, TM) innerhalb zulässiger Bereiche liegen.

11. Verfahren nach Anspruch 10, **dadurch gekennzeichnet, dass** festgestellt wird, ob Sichtübereinstimmung der durch die Vergleichsblöcke (61, 62, 63, 64) ausgegebenen Signale besteht, und dass ein Warnsignal (C) ausgegeben wird, falls eine Nichtübereinstimmung festgestellt wird.

12. Verfahren nach Anspruch 11, **dadurch gekennzeichnet, dass** ein erstes Signal (S1) ausgegeben wird, welches das Ausgeben des Aufteilungssignals (V2) zulässt, um den Brennstoff zwischen dem ersten und dem zweiten Brenner (20, 21) aufzuteilen; und dass der Wert des Aufteilungssignals (V2) mittels eines Steuerblocks (66) festgestellt wird.

13. Verfahren nach Anspruch 11, **dadurch gekennzeichnet, dass** ein zweites Signal (S2) ausgegeben wird, welches das Ausgeben eines Signals (R1, R2) zulässt, welches den Dampfkühler (F1, F2) in Betrieb setzt, um dem Dampf, der durch den Dampfkreislauf (17) geliefert wird, Wärme zu entziehen.

## Revendications

1. Centrale électrique à cycles combinés comprenant une unité de turbine à gaz (2) ; une unité de turbine à vapeur (3) ; un circuit de vapeur (17) s'étendant à travers des premiers et deuxièmes modules d'échange de chaleur (15, 24, 30, 33, 34, 35, 37, 38, 40, 41, 42, 43, 44) agencés en ligne ; et un générateur de vapeur à récupération de chaleur post allumage (16), qui transfère l'énergie résiduelle des gaz d'échappement de l'unité de turbine à gaz (2) à la vapeur, et qui est équipé d'un premier brûleur à puissance ajustable (20) pour chauffer les premiers et deuxièmes modules d'échange de chaleur (15, 24, 30, 33, 34, 35, 37, 38, 40, 41, 42, 43, 44) ; et d'un deuxième brûleur à puissance ajustable (21) agencé entre les premiers et deuxièmes modules d'échange de chaleur (15, 24, 30, 33, 34, 35, 37, 38, 40, 41, 42, 43, 44) pour chauffer uniquement les deuxièmes (15, 24, 30, 33, 34, 35, 40, 41, 42) ; des premier et deuxième capteurs de température (52, 53) pour émettre un signal de température (TM) associé, respectivement, à la température de la vapeur le long de la section du circuit de vapeur (17) reliant les premiers modules d'échange de chaleur (37, 38, 43, 44) et l'unité de turbine à vapeur (3) et au signal de température de vapeur (TH) le long de la section du circuit de vapeur (17) reliant les deuxièmes modules d'échange de chaleur (15, 24, 30, 33, 34, 35, 37, 38, 40, 41, 42, 43, 44) et l'unité de turbine à vapeur (3) ; et une unité de commande (51) pour ajuster la puissance des premier et deuxième brûleurs (20, 21) en fonction des signaux de température (TH, TM) ; dans lequel la centrale comprend des conduites d'alimentation en combustible (46, 47, 48) vers les premier et deuxième brûleurs (20, 21) ; la centrale étant **caractérisée en ce que** l'unité de commande (51) émet un signal de puissance (V1) définissant l'alimentation en combustible totale vers les premier et deuxième brûleurs (20, 21) ; et un signal de division (V2) pour diviser l'alimentation en combustible entre les premier et deuxième brûleurs (20, 21) en fonction des signaux de température (TH, TM).

2. Centrale selon la revendication 1, **caractérisée en ce que** le générateur de vapeur à récupération de chaleur (16) comprend une chambre de combustion (18) s'étendant de la sortie de l'unité de turbine à gaz (2) à l'embouchure (19) d'une cheminée ; les gaz de l'unité de turbine à gaz (2) étant amenés sensiblement dans une direction donnée (D1) à l'embouchure (19) de la cheminée ; et les premier et deuxième brûleurs (20, 21) et les premiers et deuxièmes modules d'échange de chaleur (15, 24, 30, 33, 34, 35, 37, 38, 40, 41, 42, 43, 44) étant agencés dans la direction donnée (D1) à l'intérieur de la chambre de combustion (18).

3. Centrale selon la revendication 1, **caractérisée en ce qu'**elle comprend au moins un désurchauffeur (F1, F2) ; l'unité de commande (51) comprenant un bloc logique (65) et un bloc de commande (66), qui émettent un signal (R1, R2) activant le désurchauffeur (F1, F2).

4. Centrale selon la revendication 1, **caractérisée en ce que** l'unité de commande (51) comprend des blocs de calcul (57, 58, 59, 60) et des blocs de comparaison (61, 62, 63, 64) pour déterminer si les signaux de température (TH, TM) sont dans des plages autorisées.

5. Centrale selon la revendication 4, **caractérisée en ce que** l'unité de commande (51) comprend un bloc logique (65) pour déterminer une incongruité des signaux émis par les blocs de comparaison (61, 62, 63, 64), et pour émettre un signal d'avertissement (C) si une incongruité est déterminée.

6. Centrale selon la revendication 4, **caractérisée en ce que** l'unité de commande (51) comprend un bloc logique (65) qui émet un premier signal (S1) autorisant l'émission du signal de division (V2) divisant le combustible entre les premier et deuxième brûleur (20, 21) ; et un bloc de commande (66) pour déterminer la valeur du signal de division (V2).

7. Centrale selon la revendication 6, **caractérisée en ce que** le bloc logique (65) émet un deuxième signal (S2) autorisant l'émission du signal (R1, R2) activant les désurchauffeurs (F1, F2).

8. Procédé de mise en oeuvre d'une centrale électrique à cycles combinés, la centrale à cycles combinés (1) comprenant une unité de turbine à gaz (2) ; une unité de turbine à vapeur (3) ; un circuit de vapeur (17) s'étendant à travers des premiers et deuxièmes modules d'échange de chaleur agencés en ligne ; et un générateur de vapeur à récupération de chaleur post allumage (16), qui transfère l'énergie résiduelle des gaz d'échappement de l'unité de turbine à gaz (2) à la vapeur ; le procédé comprenant les étapes de chauffage des premiers et deuxièmes modules d'échange de chaleur (15, 24, 30, 33, 34, 35, 37, 38, 40, 41, 42, 43, 44) du générateur de vapeur à récupération de chaleur (16) au moyen d'un premier brûleur à puissance ajustable (20) ; de chauffage uniquement des deuxièmes modules d'échange de chaleur (15, 24, 30, 33, 34, 35, 40, 41, 42) au moyen d'un deuxième brûleur à puissance ajustable (21) situé entre les premiers (37, 38, 43, 44) et les deuxièmes (15, 24, 30, 33, 34, 35, 40, 41, 42) modules d'échange de chaleur ; d'émission de signaux de température (TH, TM) associés, respectivement, à la température de la vapeur le long de la section du circuit de vapeur (17) reliant les premiers modules d'échange de chaleur (37, 38, 43, 44) et l'unité de turbine à vapeur (3) et au signal de température de vapeur (TH) le long de la section du circuit de vapeur (17) reliant les deuxièmes modules d'échange de chaleur (15, 24, 30, 33, 34, 35, 37, 38, 40, 41, 42, 43, 44) et l'unité de turbine à vapeur (3) ; et d'ajustement de la puissance des premier et deuxième brûleurs (20, 21) en fonction des signaux de température (TH, TM) au moyen d'une unité de commande (51) ; le procédé étant **caractérisé par** l'ajustement de la puissance du générateur de vapeur à récupération de chaleur (16) en ajustant l'alimentation en combustible totale vers les premier et deuxième brûleurs (20, 21) au moyen d'un signal de puissance (V1) et en fonction de la demande de puissance (Pset) et de la puissance totale fournie par l'unité de turbine à gaz (2) et l'unité de turbine à vapeur (3) ; et la division de l'alimentation en combustible entre les premier et deuxième brûleurs (20, 21) au moyen d'un signal de division (V2) et en fonction des signaux de température (TH, TM).

9. Procédé selon la revendication 8, **caractérisé en ce que** les gaz émis par l'unité de turbine à gaz (2) sont amenés le long d'une chambre de combustion (18) du générateur de vapeur à récupération de chaleur (16) dans une direction (D1) dans laquelle les premier et deuxième brûleurs (20, 21) et le nombre de modules d'échange de chaleur (15, 24, 30, 33, 34, 35, 37, 38, 40, 41, 42, 43, 44) sont agencés.

10. Procédé selon la revendication 8, **caractérisé par** la détermination si les signaux de température (TH, TM) sont dans des plages autorisées.

11. Procédé selon la revendication 10, **caractérisé par** la détermination d'une incongruité des signaux émis par les blocs de comparaison (61, 62, 63, 64) ; et l'émission d'un signal d'avertissement (C) si une incongruité est déterminée.

12. Procédé selon la revendication 11, **caractérisé par** l'émission d'un premier signal (S1) autorisant l'émission du signal de division (V2) divisant le combustible entre les premier et deuxième brûleurs (20, 21) ; et la détermination de la valeur du signal de division (V2) au moyen d'un bloc de commande (66).

13. Procédé selon la revendication 11, **caractérisé par** l'émission d'un deuxième signal (S2) autorisant l'émission d'un signal (R1, R2) activant un désurchauffeur (F, F2) pour retirer la chaleur de la vapeur fournie par le circuit de vapeur (17).
